# EUROPEAN PATENT APPLICATION

(11) **EP 4 814 958 A2**
(43) Date of publication of application: **30.09.2026**
(21) Application number: 26184452.6
(22) Date of filing: 13.04.2023
(51) Int. Cl.: G10L 25/18

(54) **TIME-DOMAIN GAIN MODELING IN THE QMF DOMAIN**

(30) Priority: 13.04.2022 US 202263330428 P; 16.03.2023 US 202363490722 P
(62) Document number(s) of the earlier application(s) in accordance with Art. 76 EPC: 23719379.2 / 4 508 634
(71) Applicant: Dolby International AB, Dublin, D02 VK60 (IE)
(72) Inventor: MUNDT, Harald, 90429 Nuremberg (DE); VILLEMOES, Lars, 113 30 Stockholm (SE)
(74) Representative: MERH-IP Matias Erny Reichl Hoffmann Patentanwälte PartG mbB

(57) **Abstract**

A method of processing audio is provided. The method includes determining modulated filter bank, MFB, domain broad band gains for fading an audio signal in accordance with a time domain target gain, so that application of the broad band gains in the MFB domain emulates application of the target gain in the time domain. Determining the broad band gains includes computing the broad band gains using the target gain, an MFB analysis prototype filter, and an MFB synthesis prototype filter. Also provided are corresponding apparatus, programs, and computer-readable storage media.

## Description

### Cross-Reference to Related Applications

This application claims priority to U.S. Provisional Patent Application No. 63/330,428 filed April 13, 2022, and U.S. Provisional Patent Application No. 63/490,722 filed March 16, 2023, each of which is hereby incorporated by reference in their entireties. This application is a European divisional application of Euro-PCT patent application EP 23719379.2 (reference: D22029EP01), filed 13 April 2023.

### Technical Field

The present disclosure relates to techniques for audio processing. In particular, the present disclosure describes modeling of time-domain gains in the Modulated Filter Bank (MFB) domain (e.g., Quadrature Mirror Filter (QMF) domain) and cross-fading of audio signals in the MFB domain when a target time-domain cross-fade gain function shall be realized as precisely as possible.

### Background

In audio encoding, the input to the encoder may be two or more audio channels which are subject to an invertible transform where the transform varies over time frames. When switching from a previous to a current time frame, transform parameters of the transformed signals are smoothly cross-faded in the time domain prior to encoding. This cross-fading needs to be mirrored at the decoder-side. Conventionally, the cross-fading is performed in the time domain, after parametric decoding in the QMF domain.
However, time-domain cross-fading introduces an additional processing delay and precludes audio processing of the decoded signals in the QMF domain.

Thus, there is a need for techniques enabling efficient audio processing, in particular at the decoder-side. There is further need for techniques enabling cross-fading of audio signals in the MFB domain (e.g., QMF domain), in particular at the decoder-side, and for efficient determination of appropriate MFB domain broad band gains.

### Summary

In view of this need, the present disclosure provides methods and apparatus for processing audio, as well as corresponding programs and computer-readable storage media, having the features of the respective independent claims.

An aspect of the present disclosure relates to a method of processing audio. The method may include determining modulated filter bank (MFB) domain broad band gains for fading an audio signal in accordance with a time domain target gain, so that application of the broad band gains in the MFB domain emulates application of the target gain in the time domain. Therein, determining the broad band gains may include computing the broad band gains using the target gain, an MFB analysis prototype filter, and an MFB synthesis prototype filter. The target gain may relate to a target gain function that is a function of time (or sample number, or other suitable time index).

Configured as defined above, the proposed method can apply broad band gains in the MFB domain, thereby enabling MFB-domain processing of the gain-applied audio signals and reducing an overall delay and computational complexity of the audio processing chain.

In some embodiments, a respective broad band gain may be computed for each of a plurality of MFB analysis time slots.

In some embodiments, computing the broad band gains may include optimizing the broad band gains by computing a least squares solution.

In some embodiments, determining the broad band gains may include determining, for each of a plurality of MFB analysis time slots and for each of a plurality of frequency bands, a respective MFB analysis signal, based on an input training signal and the MFB analysis prototype filter. Determining the broad band gains may further include determining, for each of the plurality of MFB analysis time slots, a respective MFB synthesis signal, based on the MFB analysis signals in the respective MFB analysis time slot and the MFB synthesis prototype filter. Determining the broad band gains may yet further include computing the broad band gains across MFB analysis time slots based on the MFB synthesis signals and the target gain.

Thereby, optimal broad band gains can be calculated in an accurate and efficient manner.

In some embodiments, computing the broad band gains may include optimizing the broad band gains by computing a least squares solution.

In some embodiments, the least squares solution may minimize an error between samples of a first audio signal and samples of a second audio signal. The first audio signal may be obtainable by MFB analysis of the training signal followed by MFB synthesis, overlap add, and application of the target gain. Alternatively, the first audio signal may be obtainable by application of the target gain and delaying by a processing delay of MFB analysis and MFB synthesis. The second audio signal may be obtainable by applying, in each MFB analysis time slot, a respective (to-be-determined) broad band gain to a respective MFB synthesis signal, and by summing contributions from all MFB analysis time slots. Therein, the first and second audio signals may be time-domain audio signals.

In some embodiments, the least squares solution may be a solution to an objective function based on a transform matrix ***T*₁** that depends on the plurality of MFB synthesis signals and a target vector *t*₁ that depends on the target gain.

In some embodiments, the transform matrix ***T*₁** may be given by ***T*₁** = [*w*₀(*n*),*w*₁(*n*), ... , *w*_{*K*-1}(*n*)] , where *K* is the number of MFB analysis time slots and *n* indicates a sample number. The target vector *t*₁ may be given by *t*₁ = *x*₂(*n*)*g*(*n* - *D_{P}*), where *x*₂(*n*) is a time-domain signal obtainable by MFB analysis of the training signal followed by MFB synthesis and overlap add, and *D_{P}* is a delay (e.g., processing delay). The least squares solution may solve the equation *T*₁*G* = *t*₁, where *G* is a broad band gain vector given by *G* = [*G*₀, *G*₁, ... , *G*_{*K*-1}]*^{T}*, with □*^{T}* indicating the transpose. *D_{P}* may be a processing delay of MFB analysis followed by MFB synthesis and overlap add.

In some embodiments, the least squares solution for the broad band gain vector *G* may be given by $G = {\left({T}_{1}^{T}{T}_{1}\right)}^{- 1} \left({T}_{1}^{T}{t}_{1}\right)$, with □⁻¹ indicating the inverse. In some embodiments, the training signal may be a random signal or a DC signal. The random signal may be a white noise signal, for example.

In some embodiments, computing the broad band gains may be performed iteratively, each iteration after the first iteration being computed with a respective modified training signal or a respective different training signal. Computing the broad band gains in each iteration after the first iteration may be further based on an average of results from at least one previous iteration. For example, a final result for the broad band gains may be determined by averaging over results of all iterations.

By repeatedly/iteratively performing the broad band gain determination for different input training signals, better accuracy of the proposed method for a broad range of real-world audio signals can be achieved.

In some embodiments, determining the broad band gains may include determining an MFB interpolation prototype filter based on the MFB analysis prototype filter and the MFB synthesis prototype filter. Determining the broad band gains may further include computing the broad band gains across MFB analysis time slots based on the MFB interpolation prototype filter and the target gain.

Thereby, optimal broad band gains can be calculated in an accurate and efficient manner.

In some embodiments, the MFB interpolation prototype filter may be determined as a product of one of the MFB analysis prototype filter and the MFB synthesis prototype filter and a mirrored (e.g., time-mirrored) and shifted version of the other one of the MFB analysis prototype filter and the MFB synthesis prototype filter. The shifted version may be shifted in accordance with an effective length of the MFB interpolation prototype filter, for example.

In some embodiments, computing the broad band gains may include optimizing the broad band gains by computing a least squares solution.

In some embodiments, the least squares solution may be a solution to an objective function based on a transform matrix ***T*₂** and a target vector *t*₂ that depends on the target gain.

In some embodiments, the least squares solution may be a solution to an objective function based on a transform matrix ***T*₂** that depends on the MFB interpolation prototype filter and a target vector *t*₂ that depends on the target gain.

In some embodiments, the transform matrix ***T*₂** may be a matrix of shifted versions of the MFB interpolation prototype filter, each associated with a particular MFB analysis time slot.

In some embodiments, the transform matrix ***T*₂** may be given by ***T*₂** = [*pᵢ*(*n*), *pᵢ*(*n - S), ... , pᵢ*(*n* - (*K -* 1)*S*)], where *pᵢ* is the MFB interpolation prototype filter, *K* is the number of MFB analysis time slots, *n* indicates a sample number, and S is a slot length of the MFB analysis time slots. The target vector ***t*₂** may be given by ${t}_{2} = g \left(n-D\right) {\sum }_{k = 0}^{K - 1} {p}_{i} \left(n-KS\right)$ , where *g* is the target gain. The least squares solution may solve the equation ***T*₂*****G** =* ***t*₂**, *G* is a broad band gain vector given by ***G*** = [*G*₀, *G*₁, *... , G*_{*K*-1}]*^{T},* with □*^{T}* indicating the transpose.

In some embodiments, the least squares solution for the broad band gain vector *G* may be given by $G = {\left({T}_{2}^{T}{T}_{2}\right)}^{- 1} \left({T}_{2}^{T}{t}_{2}\right)$, with □⁻¹ indicating the inverse. In some embodiments, the MFB interpolation prototype filter *pᵢ* may be given by *pᵢ*(*n*) = *p_{S}*(*n*)*p_{A}*(*D* - *n*), where *p_{A}* is the MFB analysis prototype filter, *p_{S}* is the MFB synthesis prototype filter, and *D* + 1 is an effective length of the MFB interpolation prototype filter *pᵢ*.

In some embodiments, the method may further include determining a set of (relevant) MFB analysis time slots by identifying a non-constant gain function section of the target gain, encapsulated by time samples, and by determining associated time slots based on the non-constant gain function section.

In some embodiments, the MFB domain may be a quadrature mirror filter (QMF) domain.

In some embodiments, the method may include applying the determined broad band gains in the MFB domain.

In some embodiments, the method may include generating a time-domain broad band signal using the determined broad band gains.

In some embodiments, the method may include limiting (e.g., mapping or clipping) the determined broad band gains to a predetermined range, for example the range from 0 to 1 (inclusive).

In some embodiments, the method may further include decoding transformed signals in the MFB domain, including fading an audio signal relating to a current parameter set and/or fading an audio signal relating to a previous parameter set, using the broad band gains per MFB analysis time slot. This may correspond to, for example, cross-fading the aforementioned audio signals. Specifically, this may correspond to cross-fading previous and current parameters (parameter sets) to achieve cross-fading of signals related to the previous and current parameters.

According to another aspect, an apparatus for processing audio is provided. The apparatus may include a processor and a memory coupled to the processor and storing instructions for the processor. The processor may be configured to perform all steps of the methods according to preceding aspects and their embodiments.

According to a another aspect, a computer program is described. The computer program may comprise executable instructions for performing the methods or method steps outlined throughout the present disclosure when executed by a computing device.

According to yet another aspect, a computer-readable storage medium is described. The storage medium may store a computer program adapted for execution on a processor and for performing the methods or method steps outlined throughout the present disclosure when carried out on the processor.

It should be noted that the methods and systems including its preferred embodiments as outlined in the present disclosure may be used stand-alone or in combination with the other methods and systems disclosed in this document. Furthermore, all aspects of the methods and systems outlined in the present disclosure may be arbitrarily combined. In particular, the features of the claims may be combined with one another in an arbitrary manner.

It will be appreciated that apparatus features and method steps may be interchanged in many ways. In particular, the details of the disclosed method(s) can be realized by the corresponding apparatus, and vice versa, as the skilled person will appreciate. Moreover, any of the above statements made with respect to the method(s) (and, e.g., their steps) are understood to likewise apply to the corresponding apparatus (and, e.g., their blocks, stages, units), and vice versa.

### Brief Description of the Drawings

The invention is explained below in an exemplary manner with reference to the accompanying drawings, wherein
**Fig. 1** is a block diagram schematically illustrating an example of a basic operation of gain application in the time domain;
**Fig. 2** is a block diagram schematically illustrating an example of an alternative operation of MFB analysis followed by MFB synthesis, and application of a delayed time-domain gain;
**Fig. 3** is a block diagram schematically illustrating an example of an operation of gain application in the MFB domain according to embodiments of the disclosure;
**Fig. 4** is a flowchart schematically illustrating a method of processing audio according to embodiments of the disclosure;
**Fig. 5** is a flowchart schematically illustrating an example of an implementation of a step in the method of **Fig. 4** according to embodiments of the disclosure;
**Fig. 6** is a diagram showing an example of a transform matrix based on a DC input training signal according to embodiments of the disclosure;
**Fig. 7** is a flowchart schematically illustrating another example of an implementation of a step in the method of **Fig. 4** according to embodiments of the disclosure;
**Fig. 8** is a diagram showing an example of a transform matrix based on an interpolation prototype filter according to embodiments of the disclosure;
**Fig. 9** is a diagram showing an example of a time-domain gain function to be modelled; and
**Fig. 10** is a block diagram of an example of an apparatus for performing methods according to embodiments of the disclosure.

### Detailed Description

The present disclosure describes methods for optimally (e.g., in a least squares error sense) calculating MFB (e.g., QMF) domain broad band gains to model any desired time-domain gain.

Here, MFB refers to any real- or (preferably) complex- valued, sub-sampled, *M*-channel (or frequency bands) modulated filter bank. Using this filter bank as an analysis filter bank, a time-domain input signal is transformed to the MFB domain (e.g., QMF domain) via MFB analysis (e.g., QMF analysis) to yield an MFB domain signal (e.g., QMF domain signal). After optional signal processing in the MFB domain, the (potentially processed) MFB domain signal is transformed back to the time domain via MFB synthesis, using an appropriate synthesis filter bank (e.g., inverse filter bank).

One example of a MFB is a QMF filter bank. The prototype filters of the analysis and the synthesis filter bank may be different and may be symmetric or asymmetric. The sub-sampling factor (or stride) *S* typically is equal to *M* (critically sampled with respect to the number of complex data) or smaller than *M* (over-sampled). Typical values for *M* for perceptual audio coding and processing at 48 kHz sample rate are 60, 64, or 77, for example. The overall analysis-synthesis system delay *D* depends on the nature of the prototype filters. With sub-sampling (*S* > 1), the processing delay *D_{P}* reduces to *D_{P}* = *D* - *S* + 1. It is assumed that the MFB (e.g., QMF filter bank) has near perfect reconstruction property and that any aliasing errors due to filter bank domain processing are sufficiently well suppressed.

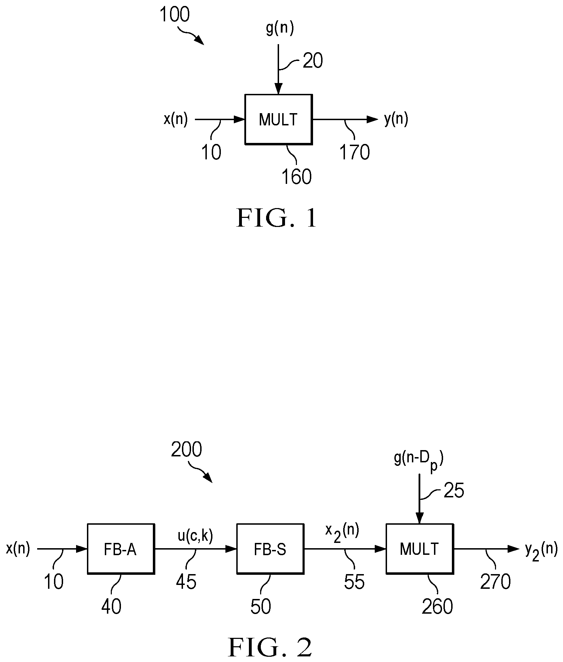

**Fig. 1** schematically illustrates an example of a basic operation of applying a gain (e.g., cross-fading gain) in the time domain. This operation may be performed for example at the encoder-side to cross-fade between different sets of parameters (e.g., transform parameters). *n* is understood to denote a sample number or any other suitable time index. An input signal *x*(*n*), 10, to which a time-domain gain *g*(*n*), 20, is to be applied is input to multiplication block 160, at which the time-domain gain *g*(*n*) is applied, for example in a sample-by-sample manner. The multiplication block 160 outputs an output signal *y*(*n*), 170, which is a faded (and delayed) version of the input signal *x*(*n*), faded by the time-domain gain *g*(*n*).

**Fig. 2** schematically illustrates an example of a corresponding operation that may be performed, for example, at the decoder-side. The input signal *x*(*n*), 10, is input to an MFB analysis block 40 (filter bank analysis, FB-A) for conversion to the MFB domain, yielding MFB domain signal *u*(*c*, *k*), 45. Here, *c* ∈ 0, ... , *M* - 1 indicates a frequency band or frequency channel, and *k* indicates an MFB time slot (e.g., QMF time slot). Optionally, parametric (de-) coding or other MFB-domain processing may be applied to the MFB-domain signal *u*(*c*, *k*). Subsequently, the MFB-domain signal *u*(*c*, *k*) is input to an MFB synthesis block 50 (filter bank synthesis, FB-S) for conversion back to the time domain, yielding time-domain signal *x*₂(*n*), 55. For application of a delayed time domain gain *g*(*n* - *D_{P}*), 25, which is appropriately delayed by a processing delay *D_{P}* of MFB analysis and synthesis, the time-domain signal *x*₂(*n*) is input to multiplication block 260, at which the (delayed) time-domain gain *g*(*n* - *D_{P}*) is applied, for example in a sample-by-sample manner. The multiplication block 260 outputs an output signal *y*₂(*n*), 270, which is a faded (and delayed) version of the input signal *x*(*n*), faded by the time-domain gain *g*(*n*).

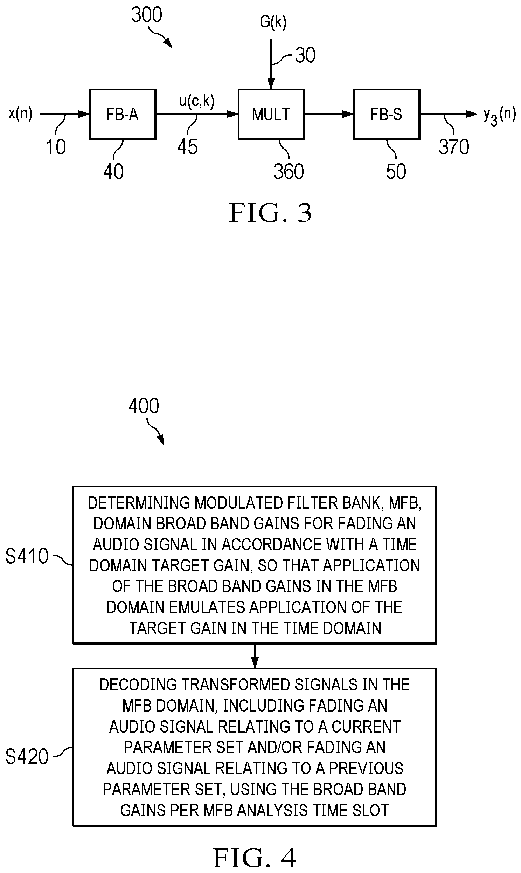

As noted above, application of the (delayed) time domain gain after MFB analysis, potential MFB domain processing, and MFB synthesis typically leads to an additional delay in the audio processing chain (e.g., decoding chain). That is, if additional processing in the MFB domain on the cross-faded audio signals is desired, this would require another MFB analysis-synthesis stage following the time-domain cross-fade, adding a further processing delay *D_{P}* of MFB analysis and synthesis to the overall delay. Moreover, when cross-fading two audio signals, the architecture of **Fig. 2** would require running two instances of the MFB synthesis block 50, followed by cross-fading in the time domain, which significantly adds to computational overhead. To address these issues, the present disclosure proposes application of the gain in the MFB domain. This is illustrated in **Fig. 3**, which shows an example of the proposed operation with application of broad band gains *G* per time slot *k* in the MFB domain (filter bank domain in general; e.g., QMF domain).

The operation shown in **Fig. 3** may be performed for example at the decoder-side. In the decoder, the transmitted/received audio signals may be decoded and undergo MFB analysis (e.g., QMF analysis). For signal reconstruction, transmitted parameters may be applied in the MFB domain and processed MFB domain signals are combined. MFB broad band slot gains may be applied to the parameters to cross-fade from previous to current frame parameters. For example, in a certain application there may be 16 time slots per frame and 16 broad band gains; however, also a smaller number, e.g., only 3 of those gains, may be optimally calculated as described below, to cover the desired cross-fade time range.

In **Fig. 3****,** the input signal *x(n),* 10 is input to an MFB analysis block 40 (filter bank analysis, FB-A) for conversion to the MFB domain, yielding an MFB domain signal *u*(*c, k*), 45. Then, MFB-domain broad band gains *G*(*k*), 30, are applied in a per-time-slot manner. Optionally, parametric (de-) coding or other MFB-domain processing may be applied to the MFB-domain signal *u*(*c, k*), 45, before or after gain application. Subsequently, the gain-applied MFB-domain signal is input to an MFB synthesis block 50 (filter bank synthesis, FB-S) for conversion back to the time domain, yielding time-domain signal *y*₃(*n*), 370, which is a faded (and delayed) version of the input signal *x*(*n*), faded by application of the MFB-domain broad band gains G(*k*) 30. Here, it is intended that application of the MFB-domain broad band gains G(*k*) 30 mimics (or emulates, implements) application of a predefined time-domain (target) gain *g*(*n*).

The present disclosure proposes two methods for calculation of optimal broad band gains *G*(*k*) as used in the example processing chain of **Fig. 3****.**

As general notation, *K* is taken to represent the number of relevant filter bank analysis time slots. Then, a column vector ***G*** holding the unknown (i.e., to-be-calculated) broad band gains ***G***(*k*) can be defined as $G = {\left[G\left(0\right) G\left(1\right) … G\left(K-1\right)\right]}^{T} ,$ where □*^{T}* indicates the transpose.
The general least squares solution to the problem of finding the broad band gains can be given as $G = {\left({T}^{T}T\right)}^{- 1} \left({T}^{T}t\right) ,$ where ***T*** is a transform matrix with *K* columns and ***t*** is a target column vector dependent on the target gain function (time-domain target gain), as will be explained below in more detail for each of the proposed methods.

Performance may be measured as an energy of an error *e*(*n*) = *y*₃(*n*) - *y*₂(*n*). This definition of the error deliberately excludes filter bank reconstruction errors and focuses on the modelling of the gain function. Referring to **Fig. 2**, assuming near perfect reconstruction property of the MFB under investigation, the following relationship holds ${x}_{2} \left(n\right) \approx x \left(n-{D}_{P}\right) .$

In accordance with the above, an example of a method 400 of processing audio according to embodiments of the disclosure is shown in the flowchart of **Fig. 4**. Method 400 comprises steps S410 and S420, of which step S420 is optional. Further, method 400 makes reference to an MFB domain, for which one example is the QMF domain.

At step S410, modulated filter bank (MFB) domain broad band gains are determined for fading an audio signal in accordance with a time domain target gain. Here, application of the broad band gains in the MFB domain should emulate (i.e., mimic, or implement) application of the target gain in the time domain. In other words, the broad band gains may be determined to minimize the error *e*(*n*) defined above, for example in a least-squares sense. The (time-domain) target gain may relate to a target gain function that is a function of time (or sample number, or any other suitable time index).

Determination of the broad band gains may include computing the broad band gains using the target gain, an MFB analysis prototype filter, and an MFB synthesis prototype filter. A respective broad band gain *G*(*k*) may be computed for each of a plurality of MFB analysis time slots *k*. Detailed examples will be described below.

Further, determination (e.g., computation, calculation) of the broad band gains may include optimizing the broad band gains by computing a least squares solution. In some embodiments, the determined broad band gains may be limited (e.g., mapped or clipped) to a predetermined target range before they are applied to any audio signals. For example, the determined broad band gains may be limited to the range from 0 (0.0) to 1 (1.0) inclusive.

At step S420, transformed signals in the MFB domain are decoded, including fading an audio signal relating to a current parameter set and/or fading an audio signal relating to a previous parameter set, using the broad band gains per MFB analysis time slot. The fading may correspond to, for example, cross-fading audio signals. Specifically, the fading may correspond to cross-fading previous and current parameters to achieve cross-fading of signals related to the previous and current parameters.

The decoding at this step may involve applying the determined broad band gains in the MFB domain. Additionally or alternatively, the decoding may involve generating a time-domain broad band signal using the determined broad band gains.
Next, example methods for determining the broad band gains will be described in more detail.

### Method 1: Training Signals

According to a first example method, optimal broad band gains may be computed for a "training" signal and applied afterwards in general.

The MFB analysis signal (e.g., QMF analysis signal) *u* at time slot *k* and frequency band c corresponding to an input training signal *x*(*n*) can be computed as $u \left(c, k\right) = {\sum }_{ν = 0}^{L - 1} x \left(kS-v\right) {p}_{A} \left(ν\right) {m}_{c} \left(v\right) ,$ with the real-valued analysis prototype filter *p_{A}* of length *L* and the modulator *m_{c}* for band *c* given by, for example ${m}_{c} \left(v\right) = exp \left(i\frac{π}{M}\left(c+0.5\right)\left(ν-D/2\right)\right) .$

The MFB synthesis signal (e.g., QMF synthesis signal) *wₖ* related to the analysis signal *u* at time slot *k* can be computed as ${w}_{k} \left(n\right) = Re \left\{{\sum }_{c = 0}^{M - 1} u \left(c, k\right) {p}_{s} \left(n-kS\right) {m}_{c} \left(n-kS\right)\right\} ,$ with the synthesis prototype filter *p_{S}* of finite length.

The final synthesis signal *x*₂ (as shown for example in **Fig. 2**) without filter bank processing can be computed as ${x}_{2} \left(n\right) = {\sum }_{k = - ∞}^{∞} {w}_{k} \left(n\right) .$ The process of Eq. (7) may be referred to as overlap add, for example.

The final output signal *y*₃ (as shown for example in **Fig. 3**) with broad band gains *G*(*k*) applied can be computed as ${y}_{3} \left(n\right) = {\sum }_{k = - ∞}^{∞} G \left(k\right) {w}_{k} \left(n\right) .$

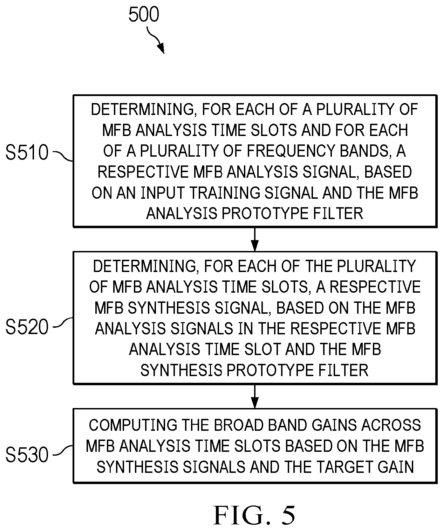

With the above definitions, determination of the broad band gains at step S410 of method 400 may proceed via example method 500 shown in the flowchart of **Fig. 5**. Method 500 comprises steps S510 through S530.

At step S510, for each of a plurality of time slots (MFB analysis time slots) *k* and for each of a plurality of frequency bands c, a respective MFB analysis signal *u*(*c, k*) is determined based on an input training signal *x(n)* and the MFB analysis prototype filter *p_{A}*.

At step S520, for each of the plurality of MFB analysis time slots *k*, a respective MFB synthesis signal *wₖ* is determined based on the MFB analysis signals *u*(*c, k*) in the respective MFB analysis time slot *k* and the MFB synthesis prototype filter *p_{S}.*

Then, at step S530, the broad band gains *G*(*k*) across MFB analysis time slots *k* are computed based on the MFB synthesis signals *wₖ* and the target gain *g*(*n*).

An example of details of the computation at step S530 that involves optimizing the broad band gains by computing a least squares solution is described next.

With *K* the number of relevant analysis time slots, a transform matrix ***T*₁** can be defined as ${T}_{1} = \left[{w}_{0}\left(n\right){w}_{1}\left(n\right)…{w}_{K - 1}\left(n\right)\right] ,$ where *n* = 0, ... , (*K* - 1)*S + L -* 1, and a column vector of broad band gains G can be defined as $G = {\left[{G}_{0} {G}_{1} … {G}_{K - 1}\right]}^{T} .$ Finally, a target column vector ***t*₁** can be defined as ${t}_{1} = {y}_{2} \left(n\right) = {x}_{2} \left(n\right) g \left(n-{D}_{P}\right) ,$ where again *n* = 0, ... , (*K* - 1)*S + L -* 1.

Then the following equation can be solved in a least squares sense to determine the broad band gains, ${T}_{1} G = {t}_{1} .$ This equation can be solved for example via $G = {\left({T}_{1}^{T}{T}_{1}\right)}^{- 1} \left({T}_{1}^{T}{t}_{1}\right) .$

In line with the above example, the least squares solution computed at step S530 of method 500 may minimize an error between samples of a first audio signal (e.g., audio signal *y*₂(*n*) defined in Eq. (11) above) and samples of a second audio signal (e.g., audio signal *y*₃(*n*) defined in Eq. (8) above). The first audio signal may be obtainable by MFB analysis of the training signal *x*(*n*) followed by MFB synthesis, overlap add, and application of the (delayed) target gain *g*(*n*). Alternatively, the first audio signal may be obtainable by application of the target gain and delaying by a processing delay of MFB analysis and MFB synthesis. The second audio signal may be obtainable by applying, in each MFB analysis time slot *k*, a respective broad band gain *G*(*k*) to a respective MFB synthesis signal *wₖ*, and by summing contributions from all MFB analysis time slots *k.* It is understood that the first and second audio signals may be time-domain audio signals.

Further in line with the above example, the least squares solution (e.g., the solution defined in Eq. (13) above) may be a solution to an objective function (e.g., the objective function defined in Eq. (12) above) based on a transform matrix ***T*₁** that depends on the plurality of MFB synthesis signals *wₖ* and a target vector ***t*₁** that depends on the target gain *g(n).*

In a specific example, the transform matrix ***T*₁** may be given by ***T*₁** = [*w*₀(*n*)*, w*₁(*n*), ... , *w*_{*K*-1}(*n*)] as described above, where *K* is the number of MFB analysis time slots and *n* indicates a sample number. Further, the target vector ***t*₁** may be given by ***t*₁** *= x*₂(*n*)*g*(*n - D_{P}*), where *x*₂(*n*) is a time-domain signal obtainable by MFB analysis of the training signal *x(n)* followed by MFB synthesis and overlap add, and *D_{P}* is a delay (e.g., processing delay of MFB analysis followed by MFB synthesis and overlap add). The least squares solution may solve the equation ***T*₁*****G** =* ***t*₁,** where ***G*** is a broad band gain vector given by ***G*** = [*G*₀, *G*₁, ... , *G*_{*K*-1}]*^{T},* with □*^{T}* indicating the transpose. Specifically, the least squares solution for the broad band gain vector ***G*** may be given by $G = {\left({T}_{1}^{T}{T}_{1}\right)}^{- 1} \left({T}_{1}^{T}{t}_{1}\right)$, with □⁻¹ indicating the inverse.

As a variant of the above, the first audio signal could be obtained by applying the target gain and then delaying by the MFB delay. Then, the optimized broad band gains would also aim to minimize any MFB reconstruction error in addition to the actual gain objective. In this case, the target vector ***t*₁** in Eq. (11) would be replaced by ${t}_{1} = \left[x⋅g\right] \left(n-{D}_{P}\right) .$

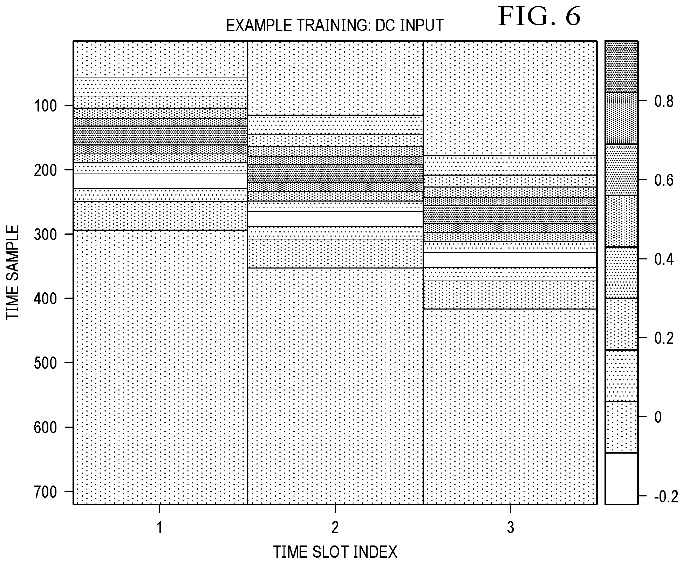

It can be shown that a white noise random input signal *x*(*n*) yields very good modelling results. Still, other input training signals may be used as well, such as a constant signal (e.g., DC signal). The latter has the advantage that the synthesis signals *wₖ* are shifted versions of one another. This is shown in the diagram of **Fig. 6**, which shows an example transform matrix ***T*₁** for constant input, *S* = 60, and 3 time slots, and in which the horizontal axis indicates time slot indices and the vertical axis indicates time samples. However, the error with constant input may be higher in general than with random input. In line with these findings, the input training signal used above may be a random signal (e.g., white noise) or a DC signal, for example.

Performance of the proposed method can further be improved by repeating the method few times (e.g., typically 2 or 3 times) and averaging the obtained optimal broad band gains.

Thus, computing the broad band gains via the steps of method 500 may be performed iteratively, with each iteration after the first iteration being computed with a respective modified training signal or a respective different training signal. Computing the broad band gains in each iteration after the first iteration may be further based on an average (e.g., weighted average, arithmetic mean, etc.) of results from at least one previous iteration. For example, a final result for the broad band gains may be determined by averaging over results of all iterations.

### Method 2: Interpolation Prototypes

According to a second example method, optimal broad band gains may be computed using an MFB interpolation prototype filter (e.g., QMF interpolation prototype filter) that is based on the MFB analysis prototype filter (e.g., QMF analysis prototype filter) and the MFB synthesis prototype filter (e.g., QMF synthesis prototype filter).

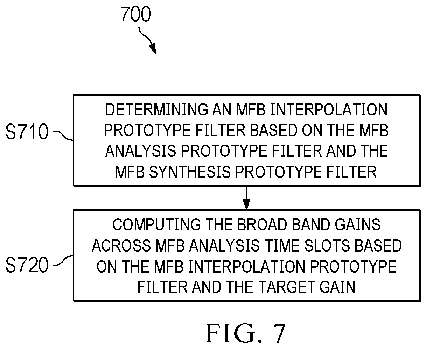

Accordingly, determination of the broad band gains at step S410 of method 400 may proceed via example method 700 shown in the flowchart of **Fig. 7**. Method 700 comprises steps S710 and S720.

At step S710, an MFB interpolation prototype filter is determined based on the MFB analysis prototype filter and the MFB synthesis prototype filter.

Then, at step S720, the broad band gains across MFB analysis time slots are computed based on the MFB interpolation prototype filter and the target gain.

This method has the advantage that no training data (training signal) is needed, and the result only depends on the analysis and synthesis prototype filters. However, some aliasing products in the filter bank processing may be ignored by this method.

An example of details of the computations at steps S710 and S720 that involve optimizing the broad band gains by computing a least squares solution is described next. In particular, it can be shown that the output *x*₂(*n*) of the analysis-synthesis filter bank operation (as shown for example in **Fig. 2**) can be approximated by the following equation, ${x}_{2} \left(n\right) \approx x \left(n-{D}_{P}\right) {\sum }_{k = - ∞}^{∞} {p}_{i} \left(n-kS\right) ,$ and the output signal *x*₃(*n*) (as shown for example in **Fig. 3**) with broad band gains *G*(*k*) applied can be approximated as ${x}_{3} \left(n\right) \approx x \left(n-{D}_{P}\right) {\sum }_{k = - ∞}^{∞} G \left(k\right) {p}_{i} \left(n-kS\right) ,$ with the interpolation prototype (interpolation prototype filter) *pᵢ* of effective length *D* + 1 defined as ${p}_{i} \left(n\right) = {p}_{S} \left(n\right) {p}_{A} \left(D-n\right) ,$ where *p_{A}* is the MFB analysis prototype filter and *p_{S}* is the MFB synthesis prototype filter.

That is, the MFB interpolation prototype filter *pᵢ* may be determined (e.g., calculated) (e.g., at step S710) as a product of one of the MFB analysis prototype filter and the MFB synthesis prototype filter and a mirrored (e.g., time-mirrored) and shifted version of the other one of the MFB analysis prototype filter and the MFB synthesis prototype filter. The mirrored and shifted version may be shifted in accordance with an effective length of the MFB interpolation prototype filter. For example, the MFB interpolation prototype filter *pᵢ*(n) may be calculated as a product of the MFB synthesis filter *p_{S}*(*n*) and a mirrored and shifted version, *p_{A}*(*D* - *n*), of the MFB analysis filter *p_{A}*(*n*), as *pᵢ*(*n*) = *p_{S}*(*n*)*p_{A}*(*D* - *n*), where *D* + 1 is the effective length of the MFB interpolation prototype filter *pᵢ*.

With *K* be the number of relevant analysis time slots, a transform matrix ***T*₂** can be defined as ${T}_{2} = \left[{p}_{i}\left(n\right){p}_{i}\left(n-S\right)…{p}_{i}\left(n-Ks\right)\right] ,$ where *n* = 0, *... ,* (*K -* 1)*S + D,* and a column vector of broad band gains ***G*** can be defined as $G = {\left[{G}_{0} {G}_{1} … {G}_{K - 1}\right]}^{T} .$ Finally, a target column vector ***t*₂** can be defined as ${t}_{2} = g \left(n-{D}_{P}\right) {\sum }_{k = 0}^{K - 1} {p}_{i} \left(n-kS\right) ,$ *for n = 0, ..., (K - 1)S + L - 1.*
Then (e.g., at step S720) the following equation can be solved in a least squares sense, ${T}_{2} G = {t}_{2} .$ This equation can be solved for example via $G = {\left({T}_{2}^{T}{T}_{2}\right)}^{- 1} \left({T}_{2}^{T}{t}_{2}\right) .$

In line with the above example, the least squares solution computed at step S720 of method 700 may be a solution to an objective function based on a transform matrix ***T*₂** and a target vector ***t*₂** that depends on the target gain *g*(*n*)*.* Further, the least squares solution may be a solution to an objective function based on a transform matrix ***T*₂** that depends on the MFB interpolation prototype filter *pᵢ*(*n*) and a target vector ***t*₂** that depends on the target gain *g*(*n*). Specifically, the transform matrix ***T*₂** may be a matrix of shifted versions of the MFB interpolation prototype filter *pᵢ*, each associated with a particular MFB analysis time slot *k*.

For example, in line with the above the transform matrix ***T*₂** may be given by ***T*₂** = [*pᵢ*(*n*), *pᵢ*(*n = S*), ... , *pᵢ*(*n* - (*K -* 1)*S*)], where *pᵢ* is the MFB interpolation prototype filter, *K* is the number of MFB analysis time slots, *n* indicates a sample number, and S is a slot length of the MFB analysis time slots. The target vector ***t*₂** may be given by ${t}_{2} = g \left(n-D\right) {\sum }_{k = 0}^{K - 1} {p}_{i} \left(n-KS\right)$ , where *g* is the target gain. Then, the least squares solution may solve the equation ***T*₂*****G** =* ***t*₂**, where ***G*** is a broad band gain vector given by ***G*** = [*G*₀, *G*₁, *... , G*_{*K*-1}]*^{T},* with □*^{T}* indicating the transpose. The least squares solution for the broad band gain vector **G** may for example be given by $G = {\left({T}_{2}^{T}{T}_{2}\right)}^{- 1} \left({T}_{2}^{T}{t}_{2}\right)$, with □⁻¹ indicating the inverse.

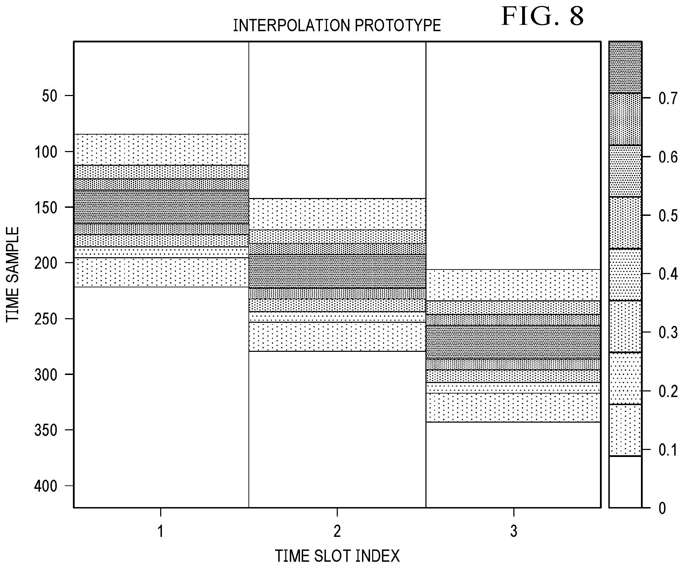

**Fig. 8** is a diagram showing an example transform matrix ***T*₂** based on an interpolation prototype for S = 60 and 3 time slots. The horizontal axis indicates time slot indices and the vertical axis indicates time samples.

Using any of the aforementioned methods, the MFB domain broad band gains may be calculated for example at initialization time at the decoder. Alternatively, they may be calculated separately from the decoder, and pre-calculated broad band gains may be stored at the decoder, for example in the form of one or more look-up tables. In yet another implementation, the broad band gains may be calculated at the encoder-side and transmitted to the decoder-side, for example together with the encoded audio signals.

### Determination of Relevant MFB Time Slots

One way to determine the relevant time slots for gain modelling may be to identify the non-constant gain function section of the target gain, encapsulated by time samples *n*₀ and *n*₁. Then, associated time slots *k*₀ and *k*₁ (with the overall number *K* of time slots given by *K = k*₁ *- k*₀ + 1) may be calculated as ${k}_{0} = INT \left(\left({n}_{0}-\frac{D}{2}\right)/S\right) ,$ ${k}_{1} = INT \left(\left({n}_{1}-\frac{D}{2}\right)/S+0.5\right) .$

The target gain function *g*(*n* - *D_{P}*) and the transform matrix involved in the optimization may be limited accordingly to *n* = *k*₀*S* ... (*k*₁ - 1)*S* + *L* - 1 for the first example method and to *n* = *k*₀*S* ... (*k*₁)*S* + *D* for the second example method.

In line with the above, the methods described above (e.g., method 400, method 500, or method 700) may further comprise determining a set of (relevant) MFB analysis time slots by identifying a non-constant gain function section of the target gain, encapsulated (e.g., delimited, bounded) by time samples (e.g., *n*₀ and *n*₁), and determining associated time slots based on the non-constant gain function section.

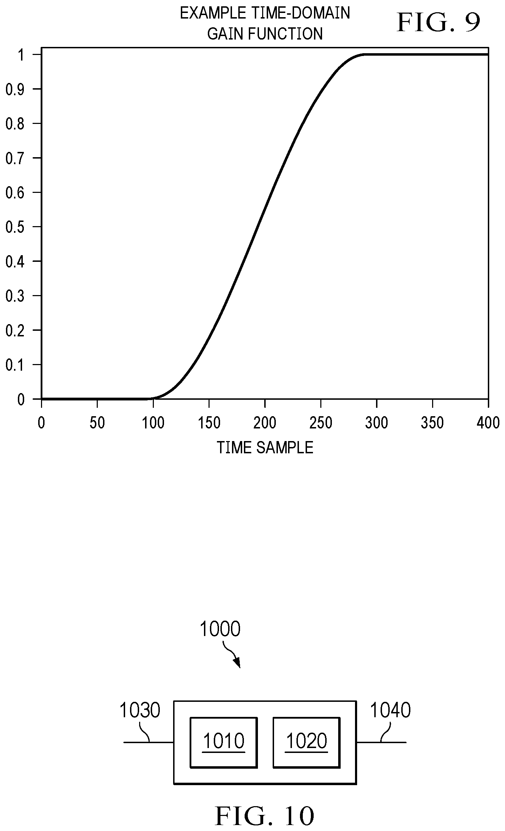

An example of a gain function corresponding to a time-domain target gain for modelling MFB-domain broad band gains (per MFB time slot) is shown in the diagram of **Fig. 9**, with the horizontal axis indicating time samples and the vertical axis indicating gain values, normalized to values from 0 to 1. A non-constant gain function section may be identified in this diagram as the rising portion between constant gain function sections. *Apparatus for Implementing Methods According to the Disclosure*

Finally, the present disclosure likewise relates to an apparatus (e.g., computer-implemented apparatus) for performing methods and techniques described throughout the present disclosure. **Fig. 10** shows an example of such apparatus 1000. In particular, apparatus 1000 comprises a processor 1010 and a memory 1020 coupled to the processor 1010. The memory 1020 may store instructions for the processor 1010. The processor 1010 may also receive, among others, suitable input data 1030 (e.g., audio input, time domain target gains, etc.), depending on use cases and/or implementations. The processor 1010 may be adapted to carry out the methods/techniques described throughout the present disclosure (e.g., method 400 of **Fig. 4**, method 500 of **Fig. 5**, and/or method 700 of **Fig. 7**) and to generate corresponding output data 1040 (e.g., MBF-domain broad band gains or cross-faded audio signals), depending on use cases and/or implementations.

The present disclosure likewise relates to corresponding computer programs, computer program products, and computer-readable storage media storing such computer programs or computer program products.

### Technical Advantages

Techniques described herein can be applied to efficiently decode transformed signals in the QMF domain which may be required for subsequent processing. The input to the encoder may be two or more audio channels which are subject to an invertible transform where the transform varies over time frames. When switching from the previous to the current time frame transform parameters the transformed signals are smoothly cross-faded in the time domain prior to encoding.

At the decoder, the encoder process is inverted in the QMF domain by cross-fading the current and previous frame parameter sets (transformed to the QMF domain, potentially combined with other processing) using time varying broad band gains per QMF analysis time slot. This disclosure describes in particular how those QMF domain broad band gains can be calculated with advantage.

### Interpretation

Aspects of the systems described herein may be implemented in an appropriate computer-based sound processing network environment (e.g., server or cloud environment) for processing digital or digitized audio files. Portions of the adaptive audio system may include one or more networks that comprise any desired number of individual machines, including one or more routers (not shown) that serve to buffer and route the data transmitted among the computers. Such a network may be built on various different network protocols, and may be the Internet, a Wide Area Network (WAN), a Local Area Network (LAN), or any combination thereof.

One or more of the components, blocks, processes or other functional components may be implemented through a computer program that controls execution of a processor-based computing device of the system. It should also be noted that the various functions disclosed herein may be described using any number of combinations of hardware, firmware, and/or as data and/or instructions embodied in various machine-readable or computer-readable media, in terms of their behavioral, register transfer, logic component, and/or other characteristics. Computer-readable media in which such formatted data and/or instructions may be embodied include, but are not limited to, physical (non-transitory), nonvolatile storage media in various forms, such as optical, magnetic or semiconductor storage media.

Specifically, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more electronic processors, such as a microprocessor and/or application specific integrated circuits ("ASICs"). As such, it should be noted that a plurality of hardware and software-based devices, as well as a plurality of different structural components, may be utilized to implement the embodiments. For example, the systems, encoders, decoders, or blocks described in the context of **Fig. 1**, **Fig. 2**, **Fig. 3**, and/or **Fig. 19** above can include one or more electronic processors, one or more computer-readable medium modules, one or more input/output interfaces, and various connections (e.g., a system bus) connecting the various components.

While one or more implementations have been described by way of example and in terms of the specific embodiments, it is to be understood that one or more implementations are not limited to the disclosed embodiments. To the contrary, it is intended to cover various modifications and similar arrangements as would be apparent to those skilled in the art. Therefore, the scope of the appended claims should be accorded the broadest interpretation so as to encompass all such modifications and similar arrangements.

Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

### Enumerated Example Embodiments

Various aspects and implementations of the present disclosure may also be appreciated from the following enumerated example embodiments (EEEs), which are not claims.

EEE1. A method of processing audio, the method comprising determining modulated filter bank, MFB, domain broad band gains for fading an audio signal in accordance with a time domain target gain, so that application of the broad band gains in the MFB domain emulates application of the target gain in the time domain, wherein determining the broad band gains includes computing the broad band gains using the target gain, an MFB analysis prototype filter, and an MFB synthesis prototype filter.

EEE2. The method according to EEE1, wherein a respective broad band gain is computed for each of a plurality of MFB analysis time slots.

EEE3. The method according to any one of the preceding EEEs, wherein computing the broad band gains includes optimizing the broad band gains by computing a least squares solution.

EEE4. The method according to EEE1, wherein determining the broad band gains includes:
determining, for each of a plurality of MFB analysis time slots and for each of a plurality of frequency bands, a respective MFB analysis signal, based on an input training signal and the MFB analysis prototype filter;
determining, for each of the plurality of MFB analysis time slots, a respective MFB synthesis signal, based on the MFB analysis signals in the respective MFB analysis time slot and the MFB synthesis prototype filter; and
computing the broad band gains across MFB analysis time slots based on the MFB synthesis signals and the target gain.

EEE5. The method according to EEE4, wherein computing the broad band gains includes optimizing the broad band gains by computing a least squares solution.

EEE6. The method according to EEE5, wherein the least squares solution minimizes an error between samples of a first audio signal and samples of a second audio signal, the first audio signal obtainable by MFB analysis of the training signal followed by MFB synthesis, overlap add, and application of the target gain, or by application of the target gain and delaying by a processing delay of MFB analysis and MFB synthesis, and the second audio signal obtainable by applying, in each MFB analysis time slot, a respective broad band gain to a respective MFB synthesis signal, and by summing contributions from all MFB analysis time slots.

EEE7. The method according to EEE5 or EEE6, wherein the least squares solution is a solution to an objective function based on a transform matrix ***T*₁** that depends on the plurality of MFB synthesis signals and a target vector ***t*₁** that depends on the target gain.

EEE8. The method according to EEE7, wherein the transform matrix ***T*₁** is given by ***T*₁** = [*w*₀(*n*),*w*₁(*n*), ... , *w*_{*K*-1}(*n*)] , where *K* is the number of MFB analysis time slots and *n* indicates a sample number, and the target vector ***t*₁** is given by ***t*₁** = *x*₂(*n*)*g*(*n* - *D_{P}*), where *x*₂(*n*) is a time-domain signal obtainable by MFB analysis of the training signal followed by MFB synthesis and overlap add, and *D_{P}* is a delay; and
wherein the least squares solution solves the equation ***T*₁G** = ***t*₁**, where ***G*** is a broad band gain vector given by ***G*** = [*G*₀, *G*₁, ... , *G*_{*K*-1}]*^{T}*, with □*^{T}* indicating the transpose.

EEE9. The method according to EEE8, wherein the least squares solution for the broad band gain vector ***G*** is given by $G = {\left({T}_{1}^{T}{T}_{1}\right)}^{- 1} \left({T}_{1}^{T}{t}_{1}\right)$, with □⁻¹ indicating the inverse.

EEE10. The method according to any one of EEE4 to EEE9, wherein the training signal is a random signal or a DC signal.

EEE11. The method according to any one of EEE4 to EEE10, wherein computing the broad band gains is performed iteratively, each iteration after the first iteration being computed with a respective modified training signal or a respective different training signal.

EEE12. The method according to EEE1, wherein determining the broad band gains includes:
determining an MFB interpolation prototype filter based on the MFB analysis prototype filter and the MFB synthesis prototype filter; and
computing the broad band gains across MFB analysis time slots based on the MFB interpolation prototype filter and the target gain.

EEE13. The method according to EEE12, wherein the MFB interpolation prototype filter is determined as a product of one of the MFB analysis prototype filter and the MFB synthesis prototype filter and a mirrored (e.g., time-mirrored) and shifted version of the other one of the MFB analysis prototype filter and the MFB synthesis prototype filter.

EEE14. The method according to EEE12 or EEE13, wherein computing the broad band gains includes optimizing the broad band gains by computing a least squares solution.

EEE15. The method according to EEE14, wherein the least squares solution is a solution to an objective function based on a transform matrix ***T*₂** and a target vector ***t*₂** that depends on the target gain.

EEE16. The method according to EEE14, wherein the least squares solution is a solution to an objective function based on a transform matrix ***T*₂** that depends on the MFB interpolation prototype filter and a target vector ***t*₂** that depends on the target gain.

EEE17. The method according to EEE15 or EEE16, wherein the transform matrix ***T*₂** is a matrix of shifted versions of the MFB interpolation prototype filter, each associated with a particular MFB analysis time slot.

EEE18. The method according to any one of EEE15 to EEE17, wherein the transform matrix ***T*₂** is given by ***T*₂** = [*pᵢ*(*n*), *pᵢ*(*n* - *S*), ... , *pᵢ*(*n* - (*K* - 1)*S*)] , where *pᵢ* is the MFB interpolation prototype filter, *K* is the number of MFB analysis time slots, *n* indicates a sample number, and *S* is a slot length of the MFB analysis time slots, and the target vector *t*₂ is given by ${t}_{2} = g \left(n-D\right) {\sum }_{k = 0}^{K - 1} {p}_{i} \left(n-KS\right)$, where *g* is the target gain; and wherein the least squares solution solves the equation ***T*₂*****G** =* ***t*₂**, where ***G*** is a broad band gain vector given by ***G*** = [*G*₀, *G*₁, ... , *G*_{*K*-1}]*^{T},* with □*^{T}* indicating the transpose.

EEE19. The method according to EEE18, wherein the least squares solution for the broad band gain vector ***G*** is given by $G = {\left({T}_{2}^{T}{T}_{2}\right)}^{- 1} \left({T}_{2}^{T}{t}_{2}\right)$, with □⁻¹ indicating the inverse.

EEE20. The method according to EEE18 or EEE19, wherein the MFB interpolation prototype filter *pᵢ* is given by *pᵢ*(*n*) *= p_{S}*(*n*)*p_{A}*(*D - n),* where *p_{A}* is the MFB analysis prototype filter, *p_{S}* is the MFB synthesis prototype filter, and D + 1 is an effective length of the MFB interpolation prototype filter *pᵢ*.

EEE21. The method according to any one of the preceding EEEs, further comprising determining a set of MFB analysis time slots by identifying a non-constant gain function section of the target gain, encapsulated by time samples, and determining associated time slots based on the non-constant gain function section.

EEE22. The method according to any one of the preceding EEEs, wherein the MFB domain is a quadrature mirror filter, QMF, domain.

EEE23. The method according to any one of the preceding EEEs, comprising applying the determined broad band gains in the MFB domain.

EEE24. The method according to any one of the preceding EEEs, comprising generating a time-domain broad band signal using the determined broad band gains.

EEE25. The method according to any one of the preceding EEEs, comprising limiting the determined broad band gains to a range from 0 to 1 inclusive.

EEE26. The method according to any one of the preceding EEEs, further comprising:
decoding transformed signals in the MFB domain, including fading an audio signal relating to a current parameter set and/or fading an audio signal relating to a previous parameter set,
using the broad band gains per MFB analysis time slot.

EEE27. An apparatus, comprising a processor and a memory coupled to the processor, and storing instructions for the processor, wherein the processor is adapted to carry out the method according to any one of EEE1 to EEE26.

EEE28. A program comprising instructions that, when executed by a processor, cause the processor to carry out the method according to any one of EEE1 to EEE26.

EEE29. A computer-readable storage medium storing the program according to EEE28.

EEE30. A method of processing audio, comprising:
computing broad band gains for a training signal, including computing a modulated filter bank (MFB) analysis signal and a MFB synthesis signal related to the MFB analysis signal; and
decoding transformed signals in a MFB domain, including cross-fading a current and
previous parameter sets using the broad band gains per MFB analysis time slot.

EEE31. The method of EEE30, wherein the training signal is a random signal or a DC signal.

EEE32. The method of EEE30, comprising determining the MFB analysis time slot by identifying non-constant gain function section encapsulated by time samples, and determining associated time slots based on the non-constant gain function.

EEE33. The method of EEE30, wherein computing the broad band gains is performed iteratively, each iteration after the first iteration being computed with a respective modified training signal and an average of results from at least one previous iteration.

EEE34. A method of processing audio, comprising:
computing broad band gains, including:
computing an interpolation prototype filter based on one or more filterbank prototype filters; and
approximating the broad band gains of a modulated filter bank (MFB) analysis signal and a MFB synthesis signal across time slots based on the interpolation prototype filter; and decoding transformed signals in a MFB domain, including cross-fading a current and previous parameter sets using the broad band gains per MFB analysis time slot.

EEE35. The method of any one of EEE30 to EEE34, comprising applying the broad band gains to a filter bank domain.

EEE36. The method of any one of EEE30 to EEE34, comprising generating the target time-domain broad band signal using the broad band gains.

EEE37. The method of any one of EEE30 to EEE36, wherein computing the broad band gains includes optimizing gain functions by computing a least squared solution.

EEE38. The method of EEE37, wherein the least squared solution is a solution to an objective function based on a transform matrix ***T*** and a target vector ***t*** that depends on a target gain function.

EEE39. The method of EEE38, wherein the matrix ***T*** is a matrix of shifted versions of the interpolation prototype or filterbank synthesis data associated with a particular analysis time slot.

EEE40. A system including one or more processors configured to perform operations of any one of EEE30 to EEE39.

EEE41. A computer program product configured to cause one or more processors to perform operations of any one of EEE30 to EEE39.

## Claims

1. A method of decoding an input audio signal, the method comprising;
determining (S410) modulated filter bank, MFB, domain broad band gains for fading the input audio signal, wherein the input audio signal is crossfaded between audio frames based on a target gain in a time domain, and
decoding (S420) transformed signals in the MFB domain using the broad band gains,
wherein application of the broad band gains in the MFB domain emulates application of the target gain in the time domain, and
wherein the broad band gains are determined based on a difference between a first audio signal obtainable by the application of the target gain and a second audio signal obtainable by the application of the broad band gains.

2. An apparatus, comprising a processor and a memory coupled to the processor, and storing instructions for the processor, wherein the processor is adapted to carry out the method according to claim 1.

3. A non-transitory computer-readable storage medium storing instructions that, upon execution by one or more processors, cause the one or more processors to perform operations according to claim 1.
